# EUROPÄISCHE PATENTSCHRIFT

(11) **EP 3 929 035 B1**
(45) Veröffentlichungstag und Bekanntmachung des Hinweises auf die Patenterteilung: **05.10.2022**
(21) Anmeldenummer: 21165286.2
(22) Anmeldetag: 26.03.2021
(51) Int. Cl.: B60Q 1/38, B62J 6/05, B60Q 1/52, B60Q 1/46, F21S 43/31, F21S 43/27, F21S 43/20, F21S 43/14, B60Q 1/26, F21S 41/143, F21V 7/00, G02B 19/00, G02B 27/09, F21S 41/32

(54) **MOTORRADLEUCHTE ZUR REALISIERUNG MINDESTENS EINER LEUCHTENFUNKTION**
MOTORCYCLE LIGHT FOR IMPLEMENTING AT LEAST ONE LIGHTING FUNCTION
LAMPE POUR MOTO PERMETTANT DE RÉALISER AU MOINS UNE FONCTION D'ÉCLAIRAGE

(30) Priorität: 26.06.2020 DE 102020003849
(43) Veröffentlichungstag der Anmeldung: 29.12.2021
(73) Patentinhaber: Motogadget GmbH, 10997 Berlin (DE)
(72) Erfinder: KELLER, Garrit, 10997 Berlin (DE)
(74) Vertreter: Wörz, Volker Alfred

(56) Entgegenhaltungen:
- EP-A1- 2 693 104
- DE-A1-102004 064 204
- DE-A1-102009 010 572
- DE-B4-102012 214 138
- JP-A- 2006 111 153
- US-A1- 2009 185 388
- US-A1- 2013 322 107
- US-A1- 2015 241 022
- US-S1- D 836 804

## Beschreibung

Die vorliegende Erfindung betrifft eine Motorradleuchte zur Realisierung mindestens einer Leuchtenfunktion. Die Motorradleuchte umfasst
- ein Gehäuse mit einer Lichtaustrittsöffnung,
- eine an dem Gehäuse befestigte Halterung zur Befestigung der Motorradleuchte an einem Motorrad,
- mindestens eine in dem Gehäuse angeordnete Lichtquelle und
- eine zwischen der mindestens einen Lichtquelle und der Lichtaustrittsöffnung angeordnete Vorsatzoptik aus einem massivem transparenten Material,
   wobei die mindestens eine Lichtquelle eine LED aufweist und in dem Gehäuse derart angeordnet und ausgerichtet ist, dass sie Licht in einer durch die Lichtaustrittsöffnung verlaufenden Hauptabstrahlrichtung abstrahlt, und
   wobei die Vorsatzoptik die Lichtaustrittsöffnung verschließt und das von der mindestens einen Lichtquelle abgestrahlte Licht zur Erzeugung einer Lichtverteilung entsprechend einer von der Motorradleuchte realisierten Leuchtenfunktion umlenkt und formt.

Aus dem Stand der Technik, zum Beispiel in dem Dokument DE102004064204 A1, sind Motorradleuchten in unterschiedlichen Ausführungsformen bekannt. Diese können zur Erzeugung einer oder mehrerer Leuchtenfunktionen ausgebildet sein. Insbesondere können die Leuchten eine oder mehrere der nachfolgenden Leuchtenfunktionen erzeugen: Blinklicht, Positionslicht, Tagfahrlicht, Kurvenlicht, Rücklicht und/oder Bremslicht.

Aus der DE 11 2017 004 088 A5 ist eine Motorradleuchte der eingangs genannten Art bekannt. Die bekannte Leuchte umfasst ein Gehäuse mit einer Lichtaustrittsöffnung und eine an dem Gehäuse befestigte Halterung zur Befestigung der Motorradleuchte an einem Motorrad. In dem Gehäuse ist eine einzige Lichtquelle angeordnet, die als eine LED ausgebildet sein kann. Die LED ist in dem Gehäuse derart angeordnet und ausgerichtet, dass sie Licht in einer durch die Lichtaustrittsöffnung verlaufenden Hauptabstrahlrichtung abstrahlt. Zwischen der Lichtquelle und der Lichtaustrittsöffnung ist ein Abstrahlkörper mit einem Reflektor auf, der seitlich der Hauptabstrahlrichtung der LED abgestrahltes Licht in Richtung der Hauptabstrahlrichtung umlenkt. Der Abstrahlkörper kann als eine Vorsatzoptik aus einem massivem transparenten Material ausgebildet sein, wobei die Reflexionsflächen des Reflektors dann durch totalreflektierende seitliche Grenzflächen der Vorsatzoptik gebildet sind. Die Vorsatzoptik verschließt die Lichtaustrittsöffnung und lenkt um und formt das von der LED ausgesandte Licht zur Erzeugung einer Lichtverteilung der von der Motorradleuchte realisierten Leuchtenfunktion.

Auf der Lichtaustrittsfläche der Vorsatzoptik der bekannten Leuchte sind zusätzliche optische Elemente im Strahlengang angeordnet, um das durch die Vorsatzoptik hindurchtretende Licht gezielt in bestimmte Richtungen umzulenken. Dadurch sollen insbesondere die gesetzlichen Anforderungen an die seitliche Sichtbarkeit bzw. Erkennbarkeit der Leuchte und deren Leuchtenfunktion erfüllt werden. Die ECE-Regelung 50 sieht bspw. die folgenden Werte für die Erkennbarkeit einer Leuchte vor:
- Positionslicht (wenn nur eine einzelne Leuchte montiert ist): horizontal: +/- 80° nach links und nach rechts; vertikal: +15° nach oben und -10° nach unten;
- Positionslicht (wenn ein Paar Leuchten montiert ist): horizontal: 45° nach innen und 80° nach außen; vertikal: +15° nach oben und -10° nach unten;
- Rücklicht (wenn nur eine einzelne Leuchte montiert ist): horizontal: +/- 80° nach links und nach rechts; vertikal: +15° nach oben und -10° nach unten;
- Rücklicht (wenn ein Paar Leuchten montiert ist): horizontal: 45° nach innen und 80° nach außen; vertikal: +15° nach oben und -10° nach unten;
- Blinklicht: horizontal: 20° nach innen und 80° nach außen; vertikal: +/-15° nach oben und nach unten; und
- Bremslicht: horizontal: +/- 45° nach links und nach rechts; vertikal: +15° nach oben und -10° nach unten.

Entsprechende oder ähnliche Werte für die seitliche Erkennbarkeit sehen auch die in anderen Ländern außerhalb der EU geltenden Normen vor, bspw. die die United Nations Regulations oder SAE (Society of Automotive Engineers, Inc.) und FMVSS (Federal Motor Vehicle Safety Standards) in den USA oder die CMVSS (Canada Motor Vehicle Safety Standards) in Kanada. Diese Werte können bei der bekannten Leuchte nur mit Hilfe der zusätzlichen optischen Elemente auf der Lichtaustrittsfläche der Vorsatzoptik erzielt werden. Die optischen Elemente sind bspw. als Prismen oder Zylinderlinsen ausgebildet. Der Nachteil der optischen Elemente liegt darin, dass die Lichtaustrittsfläche der Vorsatzoptik nicht glatt ist, so dass sich Schmutz, Insekten o.ä. leicht absetzen können. Zudem gestaltet sich die Reinigung der Lichtaustrittsfläche aufgrund der hervorstehenden optischen Elemente als aufwendig. Dieser Nachteil wird noch dadurch verschärft, dass sich am Übergang zwischen der Lichtaustrittsfläche der Vorsatzoptik und den optischen Elementen Kanten bilden, in denen Schmutz und Insekten besonders hartnäckig anhaften können.

Ausgehend von dem beschriebenen Stand der Technik liegt der vorliegenden Erfindung die Aufgabe zugrunde, eine Motorradleuchte der eingangs genannten Art dahingehend auszugestalten und weiterzubilden, dass die Anforderungen an die seitliche Sichtbarkeit bzw. Erkennbarkeit der Leuchte oder der durch sie erzeugten Leuchtenfunktion auch ohne optische Elemente auf der Lichtaustrittsfläche der Vorsatzoptik erfüllt werden können.

Zur Lösung dieser Aufgabe wird eine Motorradleuchte mit den Merkmalen des Anspruchs 1 vorgeschlagen. Insbesondere wird ausgehend von der Motorradleuchte der eingangs genannten Art vorgeschlagen, dass eine Lichtaustrittsfläche der Vorsatzoptik in einer Horizontalebene betrachtet, die durch die Lichtquelle oder eine der Lichtquellen verläuft und die Hauptabstrahlrichtung der Lichtquelle umfasst, eine erste konvexe Wölbung und in einer Vertikalebene betrachtet, die durch die Lichtquelle oder eine der Lichtquellen verläuft und die Hauptabstrahlrichtung der Lichtquelle umfasst, eine zweite konvexe Wölbung aufweist, die geringer ist als die erste konvexe Wölbung in der Horizontalebene.

Die Leuchte wird vorzugsweise seitlich an einem Motorrad befestigt. Die Halterung zur Befestigung der Leuchte umfasst vorzugsweise eine Gewindestange, auf die eine Mutter aufgeschraubt werden kann. Bevorzugt ist die Halterung einstückig mit dem Gehäuse der Leuchte ausgebildet, bspw. aus einem Metallteil (z.B. Aluminium) gefräst. Ein Teil des Motorrads kann zwischen der Mutter und dem Gehäuse der Leuchte oder einem entsprechenden Anschlag der Leuchte eingespannt und die Leuchte so an dem Motorrad befestigt werden. Alternativ wäre es auch denkbar, zwischen der Mutter und dem Gehäuse oder einem Anschlag der Leuchte ein elastisch verformbares hohlzylinderförmiges Halteelement anzuordnen, in dessen inneren Hohlraum die Gewindestange verläuft. Durch Festziehen der Mutter wird das Halteelement komprimiert und verformt, insbesondere nach außen gewölbt, so dass sich dessen Umfang vergrößert. Das verformte Halteelement drückt von innen gegen ein rohrförmiges Aufnahmeelement des Motorrads, beispielsweise eine Lenkerstange, in das die Halterung der Leuchte mit dem Halteelement vor dem Festziehen der Mutter eingeführt worden ist, so dass die Leuchte nach dem Festziehen der Mutter klemmend an dem Aufnahmeelement und somit auch an dem Motorrad befestigt ist.

Bei ordnungsgemäß an dem Motorrad befestigter Leuchte ist die Hauptabstrahlrichtung der Lichtquelle bei Geradeausfahrt vorzugsweise in Fahrtrichtung (bei einer an einem vorderen Bereich des Motorrads montierten vorderen Leuchte) oder entgegen der Fahrtrichtung des Motorrads (bei einer an einem hinteren Bereich des Motorrads montierten hinteren Leuchte) gerichtet. Die Horizontalebene der Leuchte umfasst die Hauptabstrahlrichtung der Lichtquelle und ist bei an dem Motorrad montierter Leuchte senkrecht zu einer vertikalen Längsebene des Motorrads ausgerichtet. Die Längsebene des Motorrads verläuft durch die beiden Räder des Motorrads und senkrecht zu den Drehachsen der Räder.

Die Wölbung der Lichtaustrittsfläche in der Horizontalebene und - falls gewünscht auch - in der Vertikalebene sorgt für eine Aufweitung bzw. Streuung des austretenden Lichtbündels in der entsprechenden Ebene. Die Streuung ist in horizontaler Richtung größer als in vertikaler Richtung. Die Streuung des austretenden Lichts in der Horizontalebene sorgt für eine verbesserte seitliche Sichtbarkeit bzw. Erkennbarkeit (visibility or geometric visibility) der Leuchte, die zumindest die gesetzlichen Anforderungen erfüllt. Bei der Motorradleuchte bildet die Lichtaustrittsfläche der Vorsatzoptik gleichzeitig einen Abschluss der Leuchte nach außen.

Eine als LED ausgebildete Lichtquelle strahlt Licht in einer Hauptabstrahlrichtung und in einen vorzugsweise 180° umfassenden Halbraum um die Hauptabstrahlrichtung herum ab. Das von der Lichtquelle abgestrahlte Licht tritt über einen Lichteintrittsbereich in die Vorsatzoptik ein. Der Lichteintrittsbereich umfasst vorzugsweise eine Vertiefung, so dass sich eine Lichteintrittsfläche, die in etwa senkrecht zu der Hauptabstrahlrichtung der Lichtquelle verläuft, am Boden der Vertiefung und ein Lichteintrittskragen, der in etwa parallel zu der Hauptabstrahlrichtung der Lichtquelle verläuft, am Rand der Vertiefung ergeben. Die in Hauptabstrahlrichtung und einem geringen Winkelbereich (bspw. +/- 30°) um die Hauptabstrahlrichtung herum abgestrahlten Lichtstrahlen treten über die Lichteintrittsfläche in die Vorsatzoptik ein und verlassen diese wieder - in der Regel ohne Reflexionen - über die Lichtaustrittsfläche. Beim Eintritt in die Vorsatzoptik und beim Austritt aus der Vorsatzoptik werden die Lichtstrahlen nach den allgemeinen Gesetzen der Optik gebrochen. Somit kann durch gezieltes Formen der Lichteintritts- und Lichtaustrittsflächen das durch die Vorsatzoptik hindurchtretende Licht in gewünschter Weise geformt und umgelenkt werden. Insbesondere ist es denkbar, die Lichteintrittsfläche und/oder die Lichtaustrittsfläche eben oder gewölbt auszubilden. Die Wölbung der Lichtaustrittsfläche ist in der Horizontalebene und in der Vertikalebene konvex ausgebildet. Die Lichteintrittsfläche kann konvex oder konkav gewölbt oder eben ausgebildet sein. Zudem ist es denkbar, den Lichteintrittsbereich in der Horizontalebene betrachtet bezüglich der Hauptabstrahlrichtung zu neigen.

Die in einem größeren Winkelbereich (bspw. > 30°) um die Hauptabstrahlrichtung herum abgestrahlten Lichtstrahlen treten über den Lichteintrittskragen in die Vorsatzoptik ein und verlassen diese wieder - unter Umständen nach einer Reflexion an einer seitlichen totalreflektierenden Grenzfläche der Vorsatzoptik - über die Lichtaustrittsfläche. Eine Reflexion der seitlich in die Vorsatzoptik eintretenden Lichtstrahlen tritt abhängig von der Ausgestaltung der Vorsatzoptik unter Umständen nicht auf. So kann bspw. durch Schrägstellen des Lichteintrittskragens und/oder durch Abflachen der seitlichen totalreflektierenden Grenzfläche der Vorsatzoptik eine Reflexion ausgeschlossen werden. Zudem kann in dem Fall, dass die Lichtstrahlen an den Grenzflächen der Vorsatzoptik totalreflektiert werden, die Form der Grenzflächen gezielt variiert werden, um das durch die Vorsatzoptik hindurchtretende Licht in gewünschter Weise zu formen und umzulenken.

Falls die Motorradleuchte mehr als eine Lichtquelle aufweist, sorgt eine einzige gemeinsame Vorsatzoptik für die gewünschte Umlenkung und Formung des hindurchtretenden Lichts der Lichtquellen, um die gewünschte Leuchtenfunktion erzielen zu können. Bevorzugt ist die Vorsatzoptik derart ausgebildet, dass das von unterschiedlichen Lichtquellen abgestrahlte und in die Vorsatzoptik eingekoppelte Licht nach dem Austritt aus der Vorsatzoptik zur Erzeugung unterschiedlicher Leuchtfunktionen dient. Insbesondere wird vorgeschlagen, dass die Vorsatzoptik für jede Lichtquelle einen eigenen Lichteintrittsbereich aufweist. Die Lichteintrittsbereiche können unterschiedlich ausgestaltet sein. So können bspw. die Lichteintrittsflächen der verschiedenen Lichteintrittsbereiche unterschiedliche Abstände zu den Lichtabstrahlflächen der jeweils zugeordneten Lichtquellen aufweisen. Ferner ist es denkbar, dass sich die Lichteintrittskragen der verschiedenen Lichteintrittsbereiche nicht über den gesamten Umfang der zugeordneten Vertiefungen, sondern nur über einen Teil des Umfangs der Vertiefung erstrecken. Die Lichteintrittskragen der verschiedenen Lichteintrittsbereiche können aneinandergrenzen und sich zu einem einzigen Lichteintrittskragen ergänzen, der alle Lichtquellen der Leuchte umfangsseitig umgibt. Ferner ist es denkbar, dass den einzelnen Lichtquellen Sammellinsen zugeordnet sind, so dass das von den Lichtquellen abgestrahlte Licht zunächst gebündelt wird bevor es auf die zugeordneten Lichteintrittsbereiche der Vorsatzoptik fällt. Dadurch kann erreicht werden, dass zumindest näherungsweise das gesamte von den Lichtquellen abgestrahlte Licht durch die jeweils zugeordneten Lichteintrittsflächen (und nicht über die Lichteintrittskragen) in die Vorsatzoptik eintritt.

Vorzugsweise ist die Wölbung derart gewählt, dass in horizontaler Richtung nach innen (in Richtung des Motorrads, an dem die Leuchte befestigt ist) eine seitliche Erkennbarkeit von mindestens 10° und nach außen (weg von dem Motorrad, an dem die Leuchte befestigt ist) von mindestens 45° erzielt wird. In vertikaler Richtung wird durch die Wölbung nach oben und unten vorzugsweise eine Sichtbarkeit von mindestens +/- 5° erzielt. Besonders bevorzugt ist die Leuchte in Abhängigkeit von der durch sie erzeugten Leuchtenfunktion derart ausgebildet, insbesondere ist die Lichtaustrittsfläche derart gewölbt, dass ohne zusätzliche optische Elemente im Strahlengang, insbesondere auf der Lichtaustrittsfläche der Vorsatzoptik, die gesetzlichen Anforderungen an die seitliche Sichtbarkeit der entsprechenden Leuchtenfunktion erfüllt werden können.

Gemäß einer vorteilhaften Weiterbildung der vorliegenden Erfindung wird vorgeschlagen, dass die Lichtaustrittsfläche der Vorsatzoptik bezüglich einer Ebene, die senkrecht zu der Hauptabstrahlrichtung der Lichtquelle oder einer der Lichtquellen verläuft, in der Horizontalebene betrachtet geneigt ist. Bevorzugt ist die Lichtaustrittsfläche der Vorsatzoptik bezüglich der Ebene, die senkrecht zu der Hauptabstrahlrichtung der Lichtquelle oder einer der Lichtquellen verläuft, in der Horizontalebene betrachtet in eine Richtung geneigt, die bei an einem Motorrad befestigter Motorradleuchte von dem Motorrad weg gerichtet ist.

Die Ebene, bezüglich der die Lichtaustrittsfläche der Vorsatzoptik in der Horizontalebene betrachtet geneigt ist, verläuft vorzugsweise senkrecht sowohl zu der Horizontalebene als auch zu der Vertikalebene. Eine Flächennormale im Zentrum der Lichtaustrittsfläche ist in der Horizontalebene betrachtet zur Seite geneigt. Diese Seitenneigung der Lichtaustrittsfläche der Vorsatzoptik lenkt das durch die Vorsatzoptik hindurchtretende Licht der mindestens einen Lichtquelle durch Brechung verstärkt zur Seite. Auf diese Weise kann eine deutlich verbesserte seitliche Erkennbarkeit der Leuchte erzielt werden, die zumindest die gesetzlichen Anforderungen erfüllt bzw. diese sogar noch übertreffen kann.

Vorzugsweise ist die Lichtaustrittsfläche der Vorsatzoptik bzw. eine Flächennormale im Zentrum der Lichtaustrittsfläche bei an einem Motorrad befestigter Motorradleuchte von dem Motorrad weg gerichtet. Die Flächennormale der Lichtaustrittsfläche ist somit bezüglich der Hauptabstrahlrichtung der Lichtquelle oder einer der Lichtquellen bzw. bezüglich der vertikalen Längsebene des Motorrads nach schräg außen gerichtet.

Um trotz der Seitenneigung der Lichtaustrittsfläche die erforderliche Lichtverteilung (bspw. maximale und/oder minimale Werte und Verteilung der Lichtstärke) für eine gewünschte Leuchtenfunktion erzielen zu können, kann es vorteilhaft sein, den Lichteintrittsbereich in der Horizontalebene betrachtet bezüglich der Hauptabstrahlrichtung der zugeordneten Lichtquelle zu neigen. Die Neigung des Lichteintrittsbereichs kann in die gleiche Richtung wie die Neigung der Lichtaustrittsfläche oder in eine andere Richtung erfolgen. Die Neigung des Lichteintrittsbereichs kann dazu führen, dass die Lichteintrittsfläche nicht senkrecht zu der Hauptabstrahlrichtung der zugeordneten Lichtquelle verläuft und/oder dass Teilbereiche des Lichteintrittskragens unterschiedlich stark geneigt bezüglich der Hauptabstrahlrichtung verlaufen. Insgesamt führt die Neigung der Lichtaustrittsfläche und/oder die Neigung des Lichteintrittsbereichs der Vorsatzoptik zu einer asymmetrischen Ausgestaltung der Vorsatzoptik bezüglich der Hauptabstrahlrichtung der zugeordneten Lichtquelle.

Es wird vorgeschlagen, dass die Halterung in der Horizontalebene betrachtet seitlich an dem Gehäuse befestigt ist und dass die Lichtaustrittsfläche der Vorsatzoptik bzw. eine Flächennormale im Zentrum der Lichtaustrittsfläche in der Horizontalebene betrachtet von der Halterung weg geneigt ist.

Gemäß einer anderen vorteilhaften Weiterbildung der Erfindung wird vorgeschlagen, dass das Gehäuse Seitenwände aufweist, welche das Gehäuse zur Seite hin und die Lichtaustrittsöffnung begrenzen, dass die Halterung in der Horizontalebene betrachtet seitlich an dem Gehäuse befestigt ist und dass eine von der Halterung weg gerichtete Seitenwand oder ein von der Halterung weg gerichteter Teil einer Seitenwand eine geringere Höhe aufweist als eine gegenüberliegende Seitenwand bzw. ein gegenüberliegender Teil einer Seitenwand. Bei an einem Motorrad befestigter Motorradleuchte weist eine von dem Motorrad weg gerichtete Seitenwand oder ein von dem Motorrad weg gerichteter Teil einer Seitenwand eine geringere Höhe auf als eine gegenüberliegende Seitenwand bzw. ein gegenüberliegender Teil einer Seitenwand.

Wenn die Motorradleuchte mehrere Lichtquellen aufweist, dienen diese vorzugsweise zur Realisierung mehrerer unterschiedlicher Leuchtenfunktionen. Dabei dient bevorzugt jeweils mindestens eine der Lichtquellen zur Realisierung einer der Leuchtenfunktionen. Die unterschiedlichen Leuchtenfunktionen der Motorradleuchte umfassen vorteilhafterweise ein Blinklicht und ein Positionslicht oder ein Rücklicht und ein Bremslicht oder ein Blinklicht, ein Rücklicht und ein Bremslicht. Dabei senden bevorzugt mindestens zwei der Lichtquellen Licht unterschiedlicher Farben aus. Diese unterschiedlichen Farben, die von den Lichtquellen einer Leuchte ausgesandt werden, sind bspw. weiß und gelb oder rot und gelb. Wenn mehrere Lichtquellen vorgesehen sind, wird vorgeschlagen, dass eine gemeinsame Vorsatzoptik zwischen allen Lichtquellen und der Lichtaustrittsöffnung angeordnet ist und die Vorsatzoptik das von den Lichtquellen ausgesandte Licht zur Erzeugung der Lichtverteilungen der unterschiedlichen Leuchtenfunktionen umlenkt und formt. Vorzugsweise ist zwar jeder der Lichtquellen ein eigener separater Lichteintrittsbereich der Vorsatzoptik zugeordnet. Es ist aber denkbar, dass Teilbereiche der Vorsatzoptik (z.B. der Lichtaustrittsfläche) von Lichtstrahlen, die von unterschiedlichen Lichtquellen abgestrahlt werden und zur Erzeugung unterschiedlicher Leuchtenfunktionen dienen, gleichermaßen genutzt werden.

Es ist denkbar, dass die Lichtaustrittsfläche der Vorsatzoptik bei durch die Vorsatzoptik verschlossener Lichtaustrittsöffnung nach außen über die Lichtaustrittsöffnung hervorragt. Dadurch ergibt sich um die Lichtaustrittsfläche herum ein transparenter Kragen, der vorzugsweise parallel zur Hauptabstrahlrichtung der mindestens einen Lichtquelle ausgerichtet ist. Der Kragen kann auf der von der Halterung abgewandten Seite der Leuchte höher als auf der gegenüberliegenden, zur Halterung zugewandten Seite ausgebildet sein. Das von der mindestens einen Lichtquelle ausgesandte und durch die Vorsatzoptik gebündelte Licht kann seitlich durch den transparenten Kragen der Vorsatzoptik austreten und somit die seitliche Sichtbarkeit der Leuchte nochmals verbessern. Der transparente Kragen der Vorsatzoptik schließt vorzugsweise bündig mit den angrenzenden Wandabschnitten des Leuchtengehäuses ab.

Gemäß einer bevorzugten Ausführungsform der Erfindung wird jedoch vorgeschlagen, dass die Lichtaustrittsfläche der Vorsatzoptik bei durch die Vorsatzoptik verschlossener Lichtaustrittsöffnung bündig mit einem die Lichtaustrittsöffnung begrenzenden Rand des Gehäuses abschließt. Die Lichtaustrittsfläche der Vorsatzoptik geht somit ohne Stufen oder Kanten in das Gehäuse der Leuchte über. Die Lichtaustrittsfläche steht nicht über den die Lichtaustrittsöffnung begrenzenden Rand des Gehäuses hervor.

Zum Verschließen der Lichtaustrittsöffnung mit der Vorsatzoptik wird die Vorsatzoptik bevorzugt in oder auf der Lichtaustrittsöffnung angeordnet und an dem Gehäuse befestigt. Die Befestigung kann bspw. mittels Schrauben, einem Schnappverschluss, einem Gewinde, Kleben oder Schweißen erfolgen. Zwischen dem Rand der Lichtaustrittsöffnung und der Vorsatzoptik kann eine Dichtung vorgesehen sein. Bevorzugt wird die Vorsatzoptik in der Lichtaustrittsöffnung verklebt, wobei der Klebstoff gleichzeitig als Dichtung zwischen der Vorsatzoptik und dem Rand der Lichtaustrittsöffnung des Gehäuses dienen kann. Bevorzugt kommt eine Kombination aus Dicht- und Klebstoff zum Einsatz. Besonders bevorzugt umfasst der verwendete Klebstoff MS (modifizierte Silane)-Polymer. Der Klebstoff dient auch dazu, Fertigungstoleranzen der Vorsatzoptik und/oder des Gehäuses auszugleichen, um stets eine gleiche hochgenaue Positionierung der Vorsatzoptik auf der Lichtaustrittsöffnung sicherzustellen.

Gemäß einer weiteren vorteilhaften Weiterbildung der Erfindung wird vorgeschlagen, dass das Gehäuse einen die Lichtaustrittsöffnung begrenzenden umlaufenden Rand aufweist, dass die Vorsatzoptik einen radial nach außen abstehenden umlaufenden Kragen aufweist, und dass der Rand und der Kragen einander zugewandte Auflageflächen aufweisen, über die die Vorsatzoptik an dem Gehäuse befestigt ist. Bei dem Rand, der die Lichtaustrittsöffnung begrenzt, handelt es sich vorzugsweise um einen oberen Rand der Seitenwände des Gehäuses. Die Auflagefläche der Vorsatzoptik befindet sich auf einer Unterseite des Kragens, und die Auflagefläche des Gehäuses befindet sich auf einer Oberseite des Randes. Die Vorsatzoptik wird mit ihrem Kragen auf den Rand des Gehäuses aufgesetzt und daran befestigt. Dabei erstreckt sich ein Großteil der Vorsatzoptik durch die Lichtaustrittsöffnung in das Innere des Gehäuses.

Gemäß einer bevorzugten Ausführungsform wird vorgeschlagen, dass die Auflageflächen des umlaufenden Rands des Gehäuses und des umlaufenden Kragens der Vorsatzoptik einander entsprechend abgeschrägt sind, so dass die Auflagefläche des umlaufenden Rands eine konusartige Form aufweist und der umlaufende Kragen nach außen hin spitz zuläuft.

Des Weiteren wird vorgeschlagen, dass die mindestens eine Lichtquelle auf einer Leiterplatte angeordnet und über diese elektrisch kontaktiert ist und dass die Leiterplatte in einer Richtung parallel zu der Hauptabstrahlrichtung der mindestens einen Lichtquelle mit ihrer von der mindestens einen Lichtquelle abgewandten Seite auf einem Auflagebereich des Gehäuses aufliegt und in dem Gehäuse befestigt ist. Die Leiterplatte ist somit in z-Richtung hochgenau bezüglich des Gehäuses positioniert. Die Befestigung der Leiterplatte in dem Gehäuse kann mittels Schrauben, einem Schnappverschluss, einem Gewinde, Kleben oder Schweißen erfolgen. Bevorzugt kommt ein Klebstoff zum Einsatz, insbesondere ein wärmeleitender Klebstoff, um die beim Betrieb der mindestens einen Lichtquelle entstehende Abwärme möglichst effizient auf das Gehäuse zu übertragen. Das Gehäuse dient gleichzeitig als Wärmesenke oder Kühlkörper für die mindestens eine Lichtquelle und - sofern vorhanden - weitere auf der Leiterplatte angeordnete elektrische Bauteile. Bevorzugt werden die Leiterplatte und - sofern vorhanden - die weiteren auf der Leiterplatte angeordneten elektrischen Bauteile mit dem Klebstoff umgossen. Besonders bevorzugt wird ein Hohlraum zwischen einer Unterseite der Leiterplatte und dem Gehäuse mit dem Klebstoff ausgefüllt.

Schließlich wird gemäß einer vorteilhaften Weiterbildung der Erfindung vorgeschlagen, dass die Vorsatzoptik in einer Ebene senkrecht zu der Hauptabstrahlrichtung der mindestens einen Lichtquelle durch Arretierstifte, die in entsprechende Arretieröffnungen eingreifen, positioniert ist. Die Vorsatzoptik ist somit in der xy-Ebene hochgenau bezüglich des Gehäuses positioniert. Somit ist über das Gehäuse eine hochgenaue Positionierung der Vorsatzoptik bezüglich der auf der Leiterplatte befestigten Lichtquellen sichergestellt.

Weitere Merkmale und Vorteile der vorliegenden Erfindung werden nachfolgend anhand der Figuren näher erläutert. Dabei können die einzelnen, in den Figuren gezeigten Merkmale der Motorradleuchte auch jeweils für sich alleine betrachtet erfindungswesentlich sein, selbst wenn dies in der Beschreibung nicht ausdrücklich erwähnt ist. Ferner können die in den verschiedenen Figuren gezeigten Merkmale der Motorradleuchte auch in beliebiger Weise miteinander kombiniert werden, selbst wenn diese Kombination in der Beschreibung nicht ausdrücklich erwähnt ist. Es zeigen:
- Figur 1: eine erste Ausführungsform einer erfindungsgemäßen Motorradleuchte in einer perspektivischen Ansicht;
- Figur 2: die Motorradleuchte aus Fig. 1 in einer Draufsicht;
- Figur 3: die Motorradleuchte aus Fig. 1 in einer Seitenansicht;
- Figur 4: die Motorradleuchte aus Fig. 1 in einer Schnittansicht in einer Horizontalebene;
- Figur 5: eine zweite Ausführungsform einer erfindungsgemäßen Motorradleuchte in einer perspektivischen Ansicht;
- Figur 6: die Motorradleuchte aus Fig. 5 in einer Draufsicht;
- Figur 7: eine dritte Ausführungsform einer erfindungsgemäßen Motorradleuchte in einer perspektivischen Ansicht;
- Figur 8: die Motorradleuchte aus Fig. 5 in einer Schnittansicht in einer Horizontalebene; und
- Figur 9: die Motorradleuchte aus Fig. 7 in einer Schnittansicht in einer Horizontalebene.

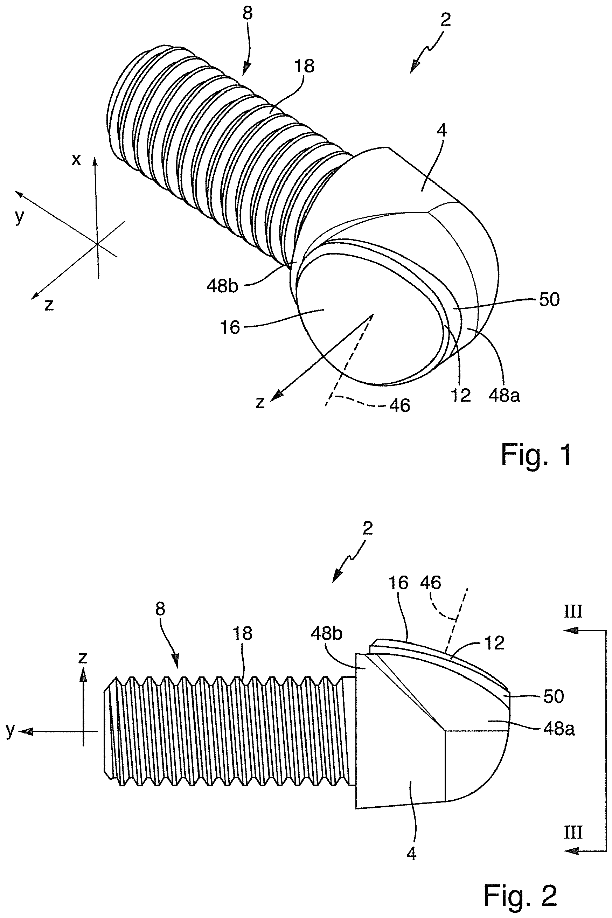

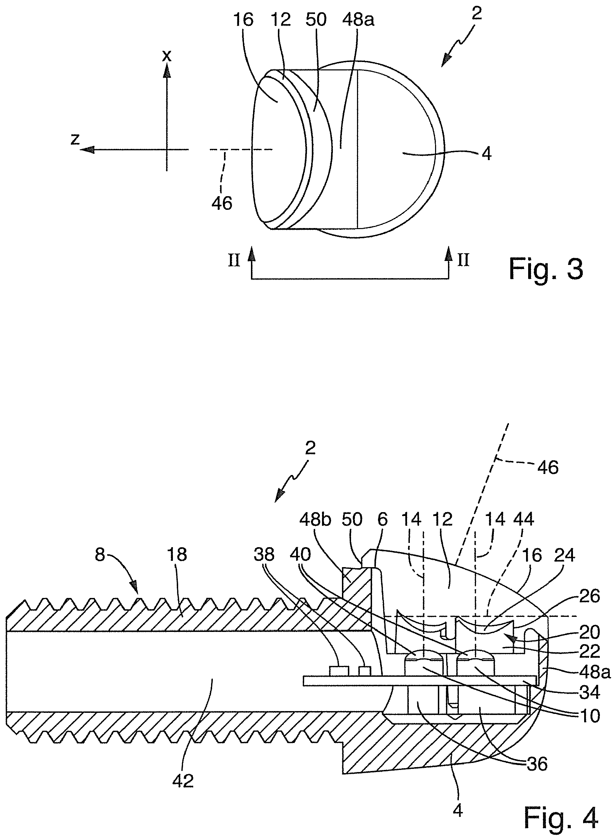

Die erfindungsgemäße Motorradleuchte der Fign. 1-4 ist in ihrer Gesamtheit mit dem Bezugszeichen 2 bezeichnet. Sie dient zur Realisierung mindestens einer Leuchtenfunktion, bspw. Blinklicht, Positionslicht, Kurvenlicht, Rücklicht und/oder Bremslicht. Die Motorradleuchte 2 umfasst
- ein Gehäuse 4 mit einer Lichtaustrittsöffnung 6 (vgl. Fig. 4),
- eine an dem Gehäuse 4 befestigte Halterung 8 zur Befestigung der Motorradleuchte 2 an einem Motorrad,
- mindestens eine in dem Gehäuse 4 angeordnete Lichtquelle 10 (vgl. Fig. 4) und
- eine zwischen der mindestens einen Lichtquelle 10 und der Lichtaustrittsöffnung 6 angeordnete Vorsatzoptik 12 aus einem massivem transparenten Material, wie bspw. Glas oder Kunststoff.

Die mindestens eine Lichtquelle 10 umfasst eine LED oder eine beliebig andere Halbleiterlichtquelle (z.B. OLED, Laser-LED) und ist in dem Gehäuse 4 derart angeordnet und ausgerichtet, dass sie Licht in einer durch die Lichtaustrittsöffnung 6 verlaufenden Hauptabstrahlrichtung 14 (vgl. Fig. 4) abstrahlt. Die Vorsatzoptik 12 verschließt die Lichtaustrittsöffnung 6 und lenkt um und formt das von der mindestens einen Lichtquelle 10 abgestrahlte Licht zur Erzeugung einer Lichtverteilung entsprechend der von der Motorradleuchte 2 realisierten Leuchtenfunktion. Damit die Motorradleuchte 2 die Anforderungen an die seitliche Sichtbarkeit bzw. Erkennbarkeit der Leuchte 2 oder der durch sie erzeugten Leuchtenfunktion ohne zusätzliche optische Elemente im Strahlengang, bspw. auf einer Lichtaustrittsfläche 16 der Vorsatzoptik 12, erfüllt, wird vorgeschlagen, dass die Lichtaustrittsfläche 16 der Vorsatzoptik 2 in einer Horizontalebene betrachtet (vgl. Fign. 2 und 4), die durch die Lichtquelle 10 oder eine der Lichtquellen 10 verläuft und die Hauptabstrahlrichtung 14 der Lichtquelle 10 umfasst, eine erste konvexe Wölbung und in einer Vertikalebene betrachtet (vgl. Fig. 3), die durch die Lichtquelle 10 oder eine der Lichtquellen 10 verläuft und die Hauptabstrahlrichtung 14 der Lichtquelle 10 umfasst, eine zweite konvexe Wölbung aufweist, die geringer ist als die erste konvexe Wölbung in der Horizontalebene. Die Horizontalebene entspricht der yz-Ebene, die Vertikalebene der xz-Ebene.

Bei der Leuchte 2 bildet die Lichtaustrittsfläche 16 der Vorsatzoptik 2 gleichzeitig auch einen Abschluss der Leuchte 2 nach außen. Insofern erfüllt die Vorsatzoptik 2 nicht nur eine lichtformende Funktion, sondern auch eine schützende Funktion, die bei herkömmlichen Leuchten üblicherweise von einer separaten flächigen Abdeckscheibe erfüllt wird. Eine solche zusätzliche separate Abdeckscheibe ist bei der erfindungsgemäßen Leuchte 2 weder erforderlich noch vorgesehen.

Die Leuchte 2 wird vorzugsweise seitlich an einem Motorrad befestigt. Die Halterung 8 zur Befestigung der Leuchte 2 umfasst vorzugsweise eine Gewindestange 18, auf die eine Mutter (nicht gezeigt) aufgeschraubt werden kann. Bevorzugt ist die Halterung 18 einstückig mit dem Gehäuse 4 der Leuchte 2 ausgebildet, bspw. zusammen mit dem Gehäuse 4 aus einem gemeinsamen Metallteil (z.B. Aluminium) gefräst oder mittels Druckguss gefertigt. Alternativ können das Gehäuse 4 und die Halterung 8 auch bspw. mittels Spritzguss aus Kunststoff gefertigt sein. Ein Teil des Motorrads, bspw. eine seitliche Verkleidung, kann zwischen der Mutter und dem Gehäuse 4 der Leuchte 2 oder einem entsprechenden Anschlag der Leuchte 2 eingespannt und die Leuchte 2 so an dem Motorrad befestigt werden. Bei am Motorrad montierter Motorradleuchte 2 sind nur das Gehäuse 4 und die Vorsatzoptik 12 von außen sichtbar.

Alternativ wäre es auch denkbar, zwischen der Mutter und dem Gehäuse 4 oder einem Anschlag der Leuchte 2 ein elastisch verformbares hohlzylinderförmiges Halteelement (nicht gezeigt) anzuordnen, durch dessen inneren Hohlraum die Gewindestange 18 geführt ist. Durch Festziehen der Mutter wird das Halteelement komprimiert und verformt, insbesondere nach außen gewölbt, so dass sich dessen Umfang vergrößert. Das verformte Halteelement drückt von innen gegen ein rohrförmiges Aufnahmeelement des Motorrads, bspw. eine Lenkerstange, in das die Halterung 8 der Leuchte 2 mit dem Halteelement vor dem Festziehen der Mutter eingeführt worden ist, so dass die Leuchte 2 nach dem Festziehen der Mutter klemmend an dem Aufnahmeelement und somit auch an dem Motorrad befestigt ist.

Bei ordnungsgemäß an dem Motorrad befestigter Leuchte 2 ist die Hauptabstrahlrichtung 14 der Lichtquelle vorzugsweise in Fahrtrichtung (bei einer an einem vorderen Bereich des Motorrads montierten vorderen Leuchte 2) oder entgegen der Fahrtrichtung des Motorrads (bei einer an einem hinteren Bereich des Motorrads montierten hinteren Leuchte 2) gerichtet. Die Horizontalebene der Leuchte umfasst die Hauptabstrahlrichtung 14 der Lichtquelle 10 und ist bei an dem Motorrad montierter Leuchte 2 senkrecht zu einer vertikalen Längsebene des Motorrads ausgerichtet. Die Längsebene des Motorrads verläuft durch die beiden Räder des Motorrads und senkrecht zu den Drehachsen der Räder.

Anhand der Fign. 2-4 kann man erkennen, dass die Wölbung in der Horizontalebene (vgl. Fign. 2 und 4) stärker ist als eine Wölbung in der Vertikalebene (vgl. Fig. 3). In dem gezeigten Beispiel ist die Wölbung in der Vertikalebene praktisch null, so dass die Lichtaustrittsfläche 16 in der Vertikalebene betrachtet weitgehend eben ist. Lediglich am äußeren Rand der Lichtaustrittsfläche 16 ist eine geringfügige Wölbung in der Vertikalebene erkennbar. Während des Betriebs der Leuchte 2 tritt durch diese Randbereiche jedoch praktisch kein Licht, so dass diese geringfügige Wölbung in den Randbereichen praktisch keinen Einfluss auf die resultierende Leuchtenfunktion bzw. deren Lichtverteilung hat.

Die Wölbung der Lichtaustrittsfläche 16 in der Horizontalebene und in der Vertikalebene sorgt für eine Aufweitung bzw. Streuung des aus der Leuchte 2 austretenden Lichtbündels in der entsprechenden Ebene. Die Streuung ist in der Horizontalebene größer als in der Vertikalebene. Die Streuung des austretenden Lichts in der Horizontalebene sorgt für eine verbesserte seitliche Sichtbarkeit bzw. Erkennbarkeit (visibility or geometric visibility) der Leuchte 2 für andere Verkehrsteilnehmer, die zumindest die gesetzlichen Anforderungen erfüllt. Die ECE-Regelung 50 sieht bspw. - abhängig von der Leuchtenfunktion - die folgenden Mindestwerte für die seitliche Erkennbarkeit einer Leuchte 2 vor (Messung gemäß der ECE R50):
- Positionslicht (wenn nur eine einzelne Leuchte montiert ist): horizontal: +/- 80° nach links und nach rechts; vertikal: +15° nach oben und -10° nach unten;
- Positionslicht (wenn ein Paar Leuchten montiert ist): horizontal: 45° nach innen und 80° nach außen; vertikal: +15° nach oben und -10° nach unten;
- Rücklicht (wenn nur eine einzelne Leuchte montiert ist): horizontal: +/- 80° nach links und nach rechts; vertikal: +15° nach oben und -10° nach unten;
- Rücklicht (wenn ein Paar Leuchten montiert ist): horizontal: 45° nach innen und 80° nach außen; vertikal: +15° nach oben und -10° nach unten;
- Blinklicht: horizontal: 20° nach innen und 80° nach außen; vertikal: +/-15° nach oben und nach unten; und
- Bremslicht: horizontal: +/- 45° nach links und nach rechts; vertikal: +15° nach oben und -10° nach unten.

Vorzugsweise ist die Wölbung der Lichtaustrittsfläche 16 derart gewählt, dass in der Horizontalebene nach innen (in Richtung des Motorrads, an dem die Leuchte 2 befestigt ist) eine seitliche Erkennbarkeit von mindestens 10° und nach außen (weg von dem Motorrad, an dem die Leuchte 2 befestigt ist) von mindestens 45° erzielt wird. In der Vertikalebene wird durch die Wölbung nach oben und unten vorzugsweise eine Erkennbarkeit von mindestens +/- 5° erzielt. Besonders bevorzugt ist die Leuchte 2 in Abhängigkeit von der durch sie erzeugten Leuchtenfunktion derart ausgebildet, insbesondere ist die Lichtaustrittsfläche 16 derart gewölbt, dass ohne zusätzliche optische Elemente im Strahlengang, insbesondere auf der Lichtaustrittsfläche 16 der Vorsatzoptik 12, die gesetzlichen Anforderungen an die seitliche Erkennbarkeit der entsprechenden Leuchtenfunktion erfüllt sind.

Die Halterung 8 ist - wie gesagt - vorzugsweise als eine Gewindestange 18 ausgebildet. Die Halterung 8 hat die Form eines Hohlzylinders, wobei der zylindrische Hohlraum 42 der Halterung 8 in das Innere des Gehäuses 4 mündet. Die Lichtquellen 10 sind vorzugsweise auf der Oberseite einer Leiterplatte 34 befestigt und über diese elektrisch kontaktiert. Auf der Leiterplatte 34 sind weitere elektrische Bauteile 36, 38, die zum Betrieb der Lichtquellen 10 erforderlich sind, angeordnet und über die Leiterplatte 34 elektrisch kontaktiert. Vorzugsweise sind alle für den Betrieb der Lichtquellen 10 erforderlichen elektrischen Bauteile 36, 38 auf der Leiterplatte 34 angeordnet, so dass die Leuchte 2 unmittelbar an ein elektrisches Bordnetz des Motorrads angeschlossen werden kann und ein zusätzliches elektrisches Vorschaltgerät nicht erforderlich ist. Ein Teil der Leiterplatte 34 kann in den Hohlraum 42 der Halterung 8 hineinragen. Anschlusskabel (nicht gezeigt) können sich von dem Motorrad durch den Hohlraum 42 zu der Leiterplatte 34 erstrecken und daran angeschlossen werden, um die Leiterplatte 34, die elektrischen Bauteile 36, 38 und die Lichtquellen 10 an das Bordnetz anzuschließen.

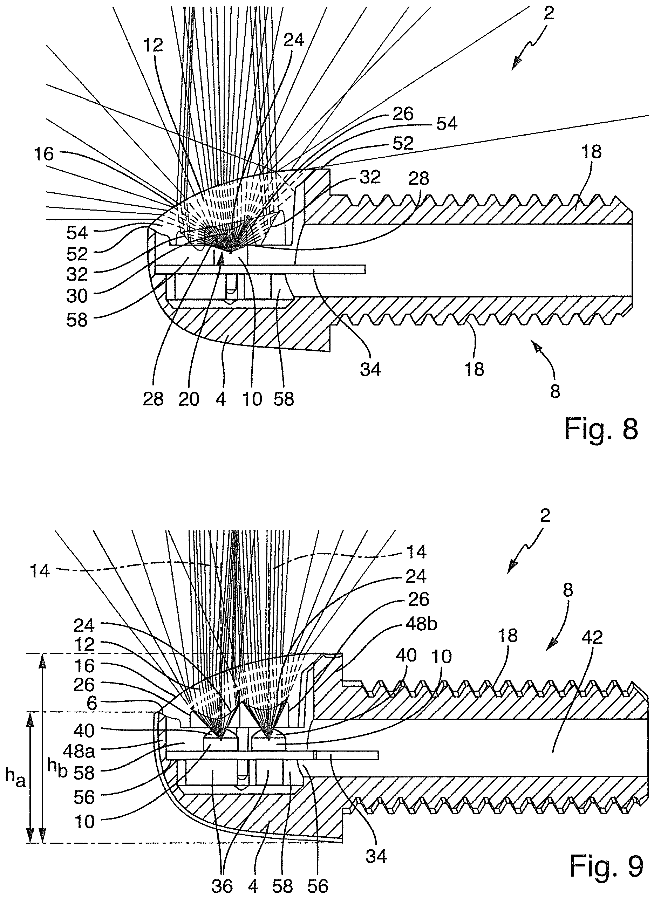

Eine als LED ausgebildete Lichtquelle 10 strahlt Licht in der Hauptabstrahlrichtung 14 und in einen vorzugsweise 180° umfassenden Halbraum um die Hauptabstrahlrichtung 14 herum ab. Das von der Lichtquelle 10 abgestrahlte Licht tritt über einen Lichteintrittsbereich 20 in die Vorsatzoptik 4 ein. Jeder Lichtquelle 10 ist separater Lichteintrittsbereich 20 zugeordnet. Der Lichteintrittsbereich 20 umfasst eine Vertiefung 22, so dass sich eine Lichteintrittsfläche 24, die in etwa senkrecht zu der Hauptabstrahlrichtung 14 der zugeordneten Lichtquelle 10 verläuft, am Boden der Vertiefung 22 und ein Lichteintrittskragen 26, der in etwa parallel zu der Hauptabstrahlrichtung 14 der Lichtquelle 10 verläuft, am Rand der Vertiefung 22 ergeben. Die in Hauptabstrahlrichtung 14 und einem geringen Winkelbereich (bspw. +/- 30°) um die Hauptabstrahlrichtung 14 herum abgestrahlten Lichtstrahlen (vgl. 28 in Fig. 8) treten über die Lichteintrittsfläche 24 in die Vorsatzoptik 12 ein und verlassen diese wieder - in der Regel ohne Reflexionen - über die Lichtaustrittsfläche 16. Beim Eintritt in die Vorsatzoptik 12 und beim Austritt aus der Vorsatzoptik 12 werden die Lichtstrahlen nach den allgemeinen Gesetzen der Optik gebrochen. Somit kann durch gezieltes Formen der Lichteintrittsfläche 24 und der Lichtaustrittsfläche 16 das durch die Vorsatzoptik 12 hindurchtretende Licht in gewünschter Weise geformt und umgelenkt werden. Insbesondere ist es denkbar, die Lichteintrittsfläche 24 und/oder die Lichtaustrittsfläche 16 eben oder gewölbt auszubilden. Die Lichteintrittsfläche 24 kann konvex oder konkav gewölbt oder eben ausgebildet sein. Die Wölbung der Lichtaustrittsfläche 16 ist in der Horizontalebene und in der Vertikalebene konvex ausgebildet.

Zudem ist es denkbar, den Lichteintrittsbereich 20 in der Horizontalebene betrachtet bezüglich der Hauptabstrahlrichtung 14 zu neigen (vgl. Fig. 8).

Die in einem größeren Winkelbereich (bspw. > 30°) um die Hauptabstrahlrichtung 14 herum abgestrahlten Lichtstrahlen (vgl. 30 in Fig. 8) treten über den Lichteintrittskragen 26 in die Vorsatzoptik 12 ein und verlassen diese wieder - unter Umständen nach einer Reflexion an einer seitlichen totalreflektierenden Grenzfläche 32 der Vorsatzoptik 12 - über die Lichtaustrittsfläche 16. Eine Reflexion der seitlich in die Vorsatzoptik 12 eintretenden Lichtstrahlen 30 tritt abhängig von der Ausgestaltung der Vorsatzoptik 12 unter Umständen nicht auf. So kann bspw. durch Schrägstellen des Lichteintrittskragens 26 und/oder durch Abflachen der seitlichen totalreflektierenden Grenzfläche 32 der Vorsatzoptik 12 eine Reflexion ausgeschlossen werden. Zudem kann in dem Fall, dass die Lichtstrahlen 30 an den Grenzflächen 32 der Vorsatzoptik 12 totalreflektiert werden, die Form der Grenzflächen 32 gezielt variiert werden, um das durch die Vorsatzoptik 12 hindurchtretende Licht in gewünschter Weise zu formen und umzulenken.

Ferner wird vorgeschlagen, dass die Lichtaustrittsfläche 16 der Vorsatzoptik 12 bezüglich einer Ebene 44, die senkrecht zu der Hauptabstrahlrichtung 14 der Lichtquelle 10 oder einer der Lichtquellen 10 verläuft, in der Horizontalebene betrachtet (vgl. Fig. 4) geneigt ist. Die Ebene 44 entspricht der xy-Ebene. Bevorzugt ist die Lichtaustrittsfläche 16 der Vorsatzoptik 12 bezüglich der Ebene 44 in der Horizontalebene betrachtet in eine Richtung geneigt, die bei an einem Motorrad befestigter Motorradleuchte 2 von dem Motorrad weg gerichtet ist.

Die Ebene 44, bezüglich der die Lichtaustrittsfläche 16 der Vorsatzoptik 12 in der Horizontalebene betrachtet geneigt ist, verläuft vorzugsweise senkrecht sowohl zu der Horizontalebene als auch zu der Vertikalebene. Eine Flächennormale 46 im Zentrum der Lichtaustrittsfläche 16 ist in der Horizontalebene betrachtet zur Seite geneigt. Diese Seitenneigung der Lichtaustrittsfläche 16 der Vorsatzoptik 12 lenkt das durch die Vorsatzoptik 12 hindurchtretende Licht der mindestens einen Lichtquelle 10 durch Brechung verstärkt zur Seite. Auf diese Weise kann eine nochmals verbesserte seitliche Erkennbarkeit der Leuchte 2 erzielt werden, die zumindest die gesetzlichen Anforderungen erfüllt bzw. diese sogar noch übertreffen kann.

Vorzugsweise ist die Lichtaustrittsfläche 16 der Vorsatzoptik 12 bzw. die Flächennormale 46 im Zentrum der Lichtaustrittsfläche 16 bei an einem Motorrad befestigter Motorradleuchte 2 von dem Motorrad weg gerichtet. Die Flächennormale 46 der Lichtaustrittsfläche 16 ist somit bezüglich der Hauptabstrahlrichtung 14 der Lichtquelle 10 oder einer der Lichtquellen 10 bzw. bezüglich der vertikalen Längsebene des Motorrads nach schräg außen gerichtet.

Um trotz der Seitenneigung der Lichtaustrittsfläche 16 die erforderliche Lichtverteilung (bspw. maximale und/oder minimale Werte und Verteilung der Lichtstärke) für eine gewünschte Leuchtenfunktion erzielen zu können, kann es vorteilhaft sein, den Lichteintrittsbereich 20 in der Horizontalebene betrachtet bezüglich der Hauptabstrahlrichtung 14 der zugeordneten Lichtquelle 10 zu neigen (vgl. Fig. 8). Die Neigung des Lichteintrittsbereichs 20 kann in die gleiche Richtung wie die Neigung der Lichtaustrittsfläche 16 oder in eine andere Richtung erfolgen. Die Neigung des Lichteintrittsbereichs 20 kann dazu führen, dass die Lichteintrittsfläche 24 nicht mehr senkrecht zu der Hauptabstrahlrichtung 14 der zugeordneten Lichtquelle 10 verläuft und/oder dass Teilbereiche des Lichteintrittskragens 26 unterschiedlich stark geneigt bezüglich der Hauptabstrahlrichtung 14 verlaufen. Insgesamt führt die Neigung der Lichtaustrittsfläche 16 und/oder die Neigung des Lichteintrittsbereichs 20 der Vorsatzoptik 20 zu einer asymmetrischen Ausgestaltung der Vorsatzoptik 12 bezüglich der Hauptabstrahlrichtung 14 der zugeordneten Lichtquelle 10.

Wenn die Halterung 8 in der Horizontalebene betrachtet seitlich an dem Gehäuse 4 befestigt ist, wäre die Lichtaustrittsfläche 16 der Vorsatzoptik 12 bzw. die Flächennormale 46 im Zentrum der Lichtaustrittsfläche 16 in der Horizontalebene betrachtet von der Halterung 8 weg geneigt.

Das Gehäuse 4 kann Seitenwände 48 aufweisen (vgl. Fig. 9), welche das Gehäuse 4 zur Seite hin und die Lichtaustrittsöffnung 6 begrenzen. Eine von der Halterung 8 weg gerichtete Seitenwand 48a oder ein von der Halterung 8 weg gerichteter Teil einer Seitenwand weist eine geringere Höhe h_a auf als eine gegenüberliegende Seitenwand 48b bzw. ein gegenüberliegender Teil einer Seitenwand mit der Höhe h_b (h_a < h_b). Bei an einem Motorrad befestigter Motorradleuchte 2 weist die von dem Motorrad weg gerichtete Seitenwand 48a oder ein von dem Motorrad weg gerichteter Teil einer Seitenwand eine geringere Höhe h_a auf als eine gegenüberliegende Seitenwand 48b bzw. ein gegenüberliegender Teil einer Seitenwand mit der Höhe h_b.

Wenn die Motorradleuchte 2 mehrere Lichtquellen 10 aufweist, dienen diese vorzugsweise zur Realisierung mehrerer unterschiedlicher Leuchtenfunktionen. Dabei dient bevorzugt jeweils mindestens eine der Lichtquellen 10 zur Realisierung einer der Leuchtenfunktionen. Die unterschiedlichen Leuchtenfunktionen der Motorradleuchte 2 umfassen vorteilhafterweise ein Blinklicht und ein Positionslicht oder ein Rücklicht und ein Bremslicht oder ein Blinklicht, ein Rücklicht und ein Bremslicht. Dabei senden bevorzugt mindestens zwei der Lichtquellen 10 Licht unterschiedlicher Farben aus. Diese unterschiedlichen Farben, die von den Lichtquellen 10 einer Leuchte 2 ausgesandt werden, sind bspw. weiß und gelb oder rot und gelb.

Wenn mehrere Lichtquellen 10 vorgesehen sind, ist vorzugsweise eine gemeinsame Vorsatzoptik 12 zwischen allen Lichtquellen 10 und der Lichtaustrittsöffnung 6 angeordnet. Die Vorsatzoptik 12 lenkt um und formt das von den Lichtquellen 10 abgestrahlte Licht zur Erzeugung der Lichtverteilungen entsprechend der unterschiedlichen Leuchtenfunktionen. Vorzugsweise ist zwar jeder der Lichtquellen 10 ein eigener separater Lichteintrittsbereich 20 der Vorsatzoptik 12 zugeordnet. Es ist aber denkbar, dass Teilbereiche der Vorsatzoptik 12 (z.B. die Lichtaustrittsfläche16) von Lichtstrahlen, die von unterschiedlichen Lichtquellen 10 abgestrahlt werden und zur Erzeugung unterschiedlicher Leuchtenfunktionen dienen, gleichermaßen genutzt werden (vgl. Fig. 9).

Es ist denkbar, dass die Lichtaustrittsfläche 16 der Vorsatzoptik 12 bei durch die Vorsatzoptik 12 verschlossener Lichtaustrittsöffnung 6 nach außen über die Lichtaustrittsöffnung hervorragt (vgl. Fign. 1-4). Dadurch ergibt sich um die Lichtaustrittsfläche 6 herum eine umlaufende transparente Umfangsfläche 50, die vorzugsweise parallel zur Hauptabstrahlrichtung 14 der mindestens einen Lichtquelle 10 ausgerichtet ist. Die Umfangsfläche 50 kann in einem Horizontalschnitt betrachtet auf der von der Halterung 8 abgewandten Seite der Leuchte 2 höher als auf der gegenüberliegenden, zur Halterung 8 gewandten Seite ausgebildet sein. Das von der mindestens einen Lichtquelle 10 ausgesandte und durch die Vorsatzoptik 12 gebündelte Licht kann seitlich durch die transparente Umfangsfläche 50 der Vorsatzoptik 12 austreten und somit die seitliche Sichtbarkeit der Leuchte 2 nochmals verbessern. Die Umfangsfläche 50 der Vorsatzoptik 12 schließt vorzugsweise bündig mit den angrenzenden Wandabschnitten 48 des Leuchtengehäuses 4 ab. In dem Ausführungsbeispiel der Fign. 1-4 wird die äußere Form des bei montierter Leuchte 2 von außen sichtbaren Teils der Leuchte 2 durch die Außenflächen des Gehäuses 4, sowie durch die Lichtaustrittsfläche 16 und die umlaufende Umfangsfläche 50 der transparenten Vorsatzoptik 12 definiert.

Auf einer als LED ausgebildeten Lichtquelle 10 kann eine Linse 40, insbesondere eine Sammellinse, angeordnet sein (vgl. Fign. 4 und 9), um den Abstrahlwinkel des abgestrahlten Lichts zu reduzieren, bspw. auf ca. 80° (+/- 40° zu beiden Seiten der Hauptabstrahlrichtung 14; vgl. Fig. 9). Falls die Motorradleuchte 2 mehr als eine Lichtquelle 10 aufweist, sorgt - wie gesagt - eine einzige gemeinsame Vorsatzoptik 12 für die gewünschte Umlenkung und Formung des hindurchtretenden Lichts der Lichtquellen 10, um die gewünschte(n) Leuchtenfunktion(en) erzielen zu können. Bevorzugt ist die Vorsatzoptik 12 derart ausgebildet, dass das von unterschiedlichen Lichtquellen 10 abgestrahlte und in die Vorsatzoptik 12 eingekoppelte Licht nach dem Austritt aus der Vorsatzoptik 12 zur Erzeugung unterschiedlicher Leuchtfunktionen dient. Insbesondere wird vorgeschlagen, dass die Vorsatzoptik 12 für jede Lichtquelle 10 einen eigenen Lichteintrittsbereich 20 aufweist. Die Lichteintrittsbereiche 20 können unterschiedlich ausgestaltet sein. So können bspw. die Lichteintrittsflächen 24 der verschiedenen Lichteintrittsbereiche 20 unterschiedliche Abstände zu den Lichtabstrahlflächen der jeweils zugeordneten Lichtquellen 10 aufweisen. Ferner ist es denkbar, dass sich die Lichteintrittskragen 26 der verschiedenen Lichteintrittsbereiche 20 nicht über den gesamten Umfang der zugeordneten Vertiefungen 22, sondern nur über einen Teil des Umfangs der Vertiefungen 22 erstrecken. Die Lichteintrittskragen 26 der verschiedenen Lichteintrittsbereiche 20 können aneinandergrenzen und sich zu einem einzigen Lichteintrittskragen ergänzen, der alle Lichtquellen 10 der Leuchte 2 umfangsseitig umgibt. Ferner ist es - wie gesagt - denkbar, dass den einzelnen Lichtquellen 10 Sammellinsen 40 zugeordnet sind, so dass das von den Lichtquellen 10 abgestrahlte Licht zunächst gebündelt wird bevor es auf die zugeordneten Lichteintrittsbereiche 20 der Vorsatzoptik 12 fällt. Dadurch kann erreicht werden, dass zumindest näherungsweise das gesamte von den Lichtquellen 10 abgestrahlte Licht durch die jeweils zugeordneten Lichteintrittsflächen 24 (und nicht über die Lichteintrittskragen 26) in die Vorsatzoptik 12 eintritt.

Zum Verschließen der Lichtaustrittsöffnung 6 mit der Vorsatzoptik 12 wird die Vorsatzoptik 12 bevorzugt in oder auf der Lichtaustrittsöffnung 6 angeordnet und an dem Gehäuse 4 befestigt. Die Befestigung kann bspw. mittels Schrauben, einem Gewinde, einem Schnappverschluss, Kleben oder Schweißen erfolgen. Zwischen einem Rand der Lichtaustrittsöffnung 6 und der Vorsatzoptik 12 kann eine Dichtung (nicht abgebildet) vorgesehen sein. Bevorzugt wird die Vorsatzoptik 12 in oder auf der Lichtaustrittsöffnung 6 verklebt, wobei der Klebstoff gleichzeitig als Dichtung zwischen der Vorsatzoptik 12 und dem Rand der Lichtaustrittsöffnung 6 des Gehäuses 4 dienen kann. Besonders bevorzugt umfasst der verwendete Klebstoff ein MS (modifiziertes Silane)-Polymer. Der Klebstoff dient auch dazu, Fertigungstoleranzen der Vorsatzoptik 12 und/oder des Gehäuses 4 auszugleichen, um stets eine gleiche hochgenaue Positionierung und staub- und feuchtigkeitsdichte Befestigung der Vorsatzoptik 12 auf der Lichtaustrittsöffnung 6 sicherzustellen.

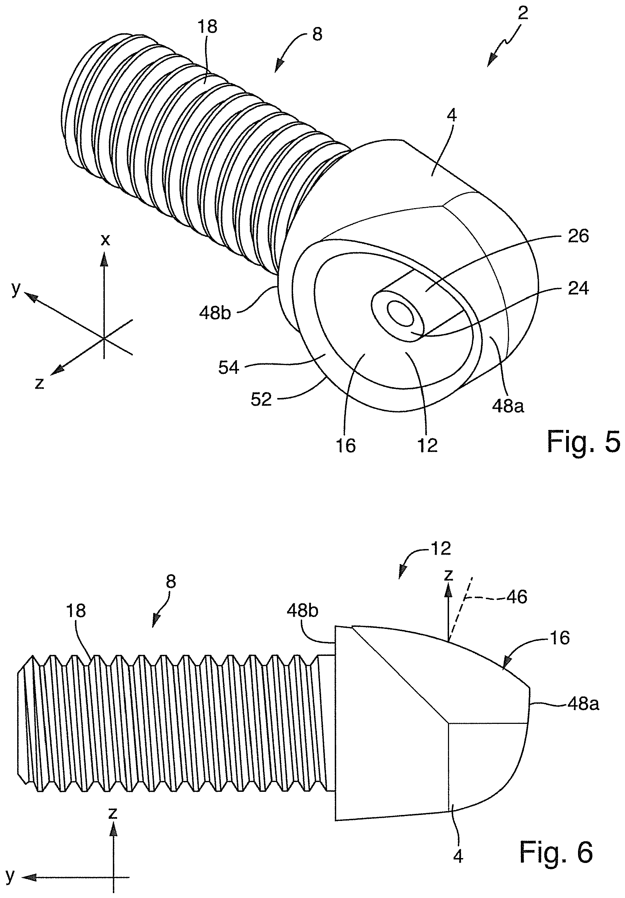

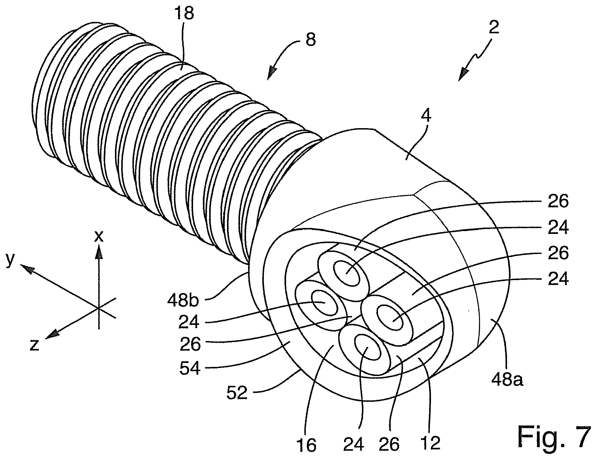

In den Ausführungsbeispielen der Fign. 5-9 schließt die Lichtaustrittsfläche 16 der Vorsatzoptik 12 bei durch die Vorsatzoptik 12 verschlossener Lichtaustrittsöffnung 6 bündig mit einem die Lichtaustrittsöffnung 6 begrenzenden Rand 52 des Gehäuses 4 ab (vgl. Fig. 8). Die Lichtaustrittsfläche 16 der Vorsatzoptik 12 geht somit ohne Stufen oder Kanten in das Gehäuse 4 der Leuchte 2 über. Insbesondere steht die Lichtaustrittsfläche 6 nicht über den die Lichtaustrittsöffnung 6 begrenzenden Rand 52 des Gehäuses 4 hervor. Vielmehr definiert die Lichtaustrittsfläche 16 der transparenten Vorsatzoptik 12 zusammen mit den Außenflächen des Gehäuses 4 die äußere Form des bei am Motorrad montierter Motorradleuchte 2 von außen sichtbaren Teils der Leuchte 2.

Besonders bevorzugt ist es, wenn das Gehäuse 4 einen die Lichtaustrittsöffnung 6 begrenzenden umlaufenden Rand 52 aufweist, die Vorsatzoptik 12 einen radial nach außen abstehenden umlaufenden Kragen 54 aufweist, und der Rand 52 und der Kragen 54 einander zugewandte Auflageflächen aufweisen, über die die Vorsatzoptik 12 an dem Gehäuse 4 aufliegt (vgl. fig. 8). Zwischen den Auflageflächen kann ein Klebstoff eingebracht sein, sodass die Vorsatzoptik 12 über die Auflageflächen auch an dem Gehäuse befestigt ist. Bei dem Rand 52, der die Lichtaustrittsöffnung 6 begrenzt, handelt es sich vorzugsweise um einen oberen Rand der Seitenwände 48 des Gehäuses 4. Die Auflagefläche der Vorsatzoptik 12 befindet sich auf einer Unterseite des Kragens 54, und die Auflagefläche des Gehäuses 4 befindet sich auf einer Oberseite des Randes 52. Die Vorsatzoptik 12 wird mit ihrem Kragen 54 auf den Rand 52 des Gehäuses 4 aufgesetzt und daran befestigt. Dabei erstreckt sich ein Großteil der Vorsatzoptik 12 durch die Lichtaustrittsöffnung 6 in das Innere des Gehäuses 4.

Es ist bevorzugt, dass die Auflageflächen des umlaufenden Rands 52 des Gehäuses 4 und des umlaufenden Kragens 54 der Vorsatzoptik 12 einander entsprechend abgeschrägt sind, so dass die Auflagefläche des umlaufenden Rands 52 eine konusartige Form aufweist und der umlaufende Kragen 54 nach außen hin spitz zuläuft.

Die mindestens eine Lichtquelle 10 ist auf der Leiterplatte 34 angeordnet und über diese elektrisch kontaktiert. Die Leiterplatte 34 liegt in einer z-Richtung parallel zu der Hauptabstrahlrichtung 14 der mindestens einen Lichtquelle 10 mit ihrer von der mindestens einen Lichtquelle 10 abgewandten Seite auf einem Auflagebereich 56 des Gehäuses 4 auf (vgl. Fig. 9). Die Leiterplatte 34 ist in dem Gehäuse 4 befestigt. Dadurch ist die Leiterplatte 34 mit den darauf befestigten Lichtquellen 10 in z-Richtung bezüglich des Gehäuses 4 hochgenau positioniert. Da die Vorsatzoptik 12 über die Auflageflächen des Rands 52 des Gehäuses 4 und des Kragens 54 der Vorsatzoptik 12 in z-Richtung bezüglich des Gehäuses 4 hochgenau positioniert ist, ergibt sich somit eine hochgenaue Positionierung der Vorsatzoptik 12 bezüglich der Lichtquellen 10 in z-Richtung.

Die Befestigung der Leiterplatte 34 in dem Gehäuse 4 kann mittels Schrauben, einem Schnappverschluss, einem Gewinde, Kleben oder Schweißen erfolgen. Bevorzugt kommt ein Klebstoff 58 zum Einsatz, insbesondere ein wärmeleitender Klebstoff, um die beim Betrieb der mindestens einen Lichtquelle 10 entstehende Abwärme möglichst effizient auf das Gehäuse 4 zu übertragen. Der wärmeleitende Klebstoff (thermic glue) kann auf Epoxidharz-Basis sein und/oder Silberpartikel aufweisen. Das Gehäuse 4 bzw. die Halterung 8 fungieren dabei als Wärmesenke oder Kühlkörper für die mindestens eine Lichtquelle 10 und - sofern vorhanden - weitere auf der Leiterplatte 34 angeordnete elektrische Bauteile 36, 38. Bevorzugt werden die Leiterplatte 34 und - sofern vorhanden - die weiteren auf der Leiterplatte 34 angeordneten elektrischen Bauteile 36, 38 mit dem Klebstoff 58 umgossen. Besonders bevorzugt wird ein Hohlraum zwischen der Unterseite der Leiterplatte 34 und dem Gehäuse 4 zumindest teilweise mit dem Klebstoff 58 ausgefüllt. Auch ein Hohlraum zwischen den Lichtquellen 10 und dem Gehäuse 4 kann zumindest teilweise mit dem Klebstoff 58 ausgefüllt sein.

Ferner wird vorgeschlagen, dass die Vorsatzoptik 12 in einer xy-Ebene senkrecht zu der Hauptabstrahlrichtung 14 der mindestens einen Lichtquelle 10 durch Arretierstifte, die in entsprechende Arretieröffnungen in der Leiterplatte 34 eingreifen, bezüglich der Leiterplatte 34 positioniert ist. Die Vorsatzoptik 34 ist somit bezüglich der auf der Leiterplatte 34 befestigten Lichtquellen 10 in der xy-Ebene hochgenau positioniert.

Das Ausführungsbeispiel der Fign. 5 und 8 weist lediglich eine Lichtquelle 10 zur Erzeugung einer einzigen Leuchtenfunktion, bspw. Blinklicht oder Positionslicht oder Rücklicht oder Bremslicht, auf. Das Ausführungsbeispiel der Fign. 6 und 9 weist dagegen insgesamt vier Lichtquellen 10 auf, wobei jeweils zwei Lichtquellen 10 der Erzeugung einer Leuchtenfunktion dienen. Mit der Leuchte 2 gemäß Fign. 6 und 9 kann bspw. ein Positionslicht und ein Blinklicht oder ein Rücklicht und ein Blinklicht oder ein Rücklicht und ein Bremslicht realisiert werden. Es wäre auch denkbar, eine dritte Leuchtenfunktion dadurch zu erzeugen, dass eine oder mehrere der Lichtquellen 10 mit einem höheren oder einem niedrigeren Strom betrieben werden. Durch Erhöhen des Betriebsstroms könnten somit die Lichtquellen 10 zur Erzeugung des Rücklichts ein Bremslicht erzeugen. Selbstverständlich wäre es auch denkbar, jeweils eine von zwei Lichtquellen 10 sowie die zwei verbleibenden Lichtquellen 10 gemeinsam zur Erzeugung jeweils einer Leuchtenfunktion heranzuziehen. Auf diese Weise könnten die beiden Einzel-Lichtquellen 10 bspw. ein Blinklicht und ein Rücklicht erzeugen und die beiden verbleibenden Lichtquellen 10 ein Bremslicht.

## Patentansprüche

1. Motorradleuchte (2) zur Realisierung mindestens einer Leuchtenfunktion, die Motorradleuchte (2) umfassend
- ein Gehäuse (4) mit einer Lichtaustrittsöffnung (6),
- eine an dem Gehäuse (4) befestigte Halterung (8) zur Befestigung der Motorradleuchte (2) an einem Motorrad,
- mindestens eine in dem Gehäuse (4) angeordnete Lichtquelle (10) und
- eine zwischen der mindestens einen Lichtquelle (10) und der Lichtaustrittsöffnung (6) angeordnete Vorsatzoptik (12) aus einem massivem transparenten Material,
wobei die mindestens eine Lichtquelle (10) eine LED aufweist und in dem Gehäuse (4) derart angeordnet und ausgerichtet ist, dass sie Licht in einer durch die Lichtaustrittsöffnung (6) verlaufenden Hauptabstrahlrichtung (14) abstrahlt, und
wobei die Vorsatzoptik (12) die Lichtaustrittsöffnung (6) verschließt und das von der mindestens einen Lichtquelle (10) abgestrahlte Licht zur Erzeugung einer Lichtverteilung entsprechend einer von der Motorradleuchte (2) realisierten Leuchtenfunktion umlenkt und formt,
wobei eine Lichtaustrittsfläche (16) der Vorsatzoptik (12) in einer Horizontalebene betrachtet, die durch die Lichtquelle (10) oder eine der Lichtquellen (10) verläuft, die Hauptabstrahlrichtung (14) der Lichtquelle (10) umfasst und bei an dem Motorrad montierter Motorradleuchte (2) senkrecht zu einer vertikalen Längsebene des Motorrads ausgerichtet ist, wobei die Längsebene des Motorrads durch Räder des Motorrads und senkrecht zu den Drehachsen der Räder verläuft, eine erste konvexe Wölbung aufweist, und in einer Vertikalebene betrachtet, die durch die Lichtquelle (10) oder eine der Lichtquellen (10) verläuft, die Hauptabstrahlrichtung (14) der Lichtquelle (10) umfasst und parallel zu der Längsebene des Motorrads ausgerichtet ist, eine zweite konvexe Wölbung aufweist,
**dadurch gekennzeichnet, dass**
die zweite konvexe Wölbung in der Vertikalebene geringer ist als die erste konvexe Wölbung in der Horizontalebene.

2. Motorradleuchte (2) nach Anspruch 1, **dadurch gekennzeichnet, dass**
die Lichtaustrittsfläche (16) der Vorsatzoptik (12) bezüglich einer Ebene (44), die senkrecht zu der Hauptabstrahlrichtung (14) der Lichtquelle (10) oder einer der Lichtquellen (10) verläuft, in der Horizontalebene betrachtet geneigt ist.

3. Motorradleuchte (2) nach Anspruch 2, **dadurch gekennzeichnet, dass**
die Lichtaustrittsfläche (16) der Vorsatzoptik (12) bezüglich der Ebene (44), die senkrecht zu der Hauptabstrahlrichtung (14) der Lichtquelle (10) oder einer der Lichtquellen (10) verläuft, in der Horizontalebene betrachtet in eine Richtung geneigt ist, die bei an einem Motorrad befestigter Motorradleuchte (2) von dem Motorrad weg gerichtet ist.

4. Motorradleuchte (2) nach einem der vorhergehenden Ansprüche, **dadurch gekennzeichnet, dass**
die Halterung (8) in der Horizontalebene betrachtet seitlich an dem Gehäuse (4) befestigt ist und dass die Lichtaustrittsfläche (16) der Vorsatzoptik (12) in der Horizontalebene betrachtet von der Halterung (8) weg geneigt ist.

5. Motorradleuchte (2) nach einem der vorhergehenden Ansprüche, **dadurch gekennzeichnet, dass**
das Gehäuse (4) Seitenwände (48) aufweist, welche das Gehäuse (4) zur Seite hin und die Lichtaustrittsöffnung (6) begrenzen, wobei bei an einem Motorrad befestigter Motorradleuchte (2) eine von dem Motorrad weg gerichtete Seitenwand (48a) oder ein von dem Motorrad weg gerichteter Teil einer Seitenwand (48a) eine geringere Höhe (h_a) aufweist als eine gegenüberliegende Seitenwand (48b) bzw. ein gegenüberliegender Teil einer Seitenwand (48b).

6. Motorradleuchte (2) nach einem der vorhergehenden Ansprüche, **dadurch gekennzeichnet, dass**
das Gehäuse (4) Seitenwände (48) aufweist, welche das Gehäuse (4) zur Seite hin und die Lichtaustrittsöffnung (6) begrenzen, dass die Halterung (8) in der Horizontalebene betrachtet seitlich an dem Gehäuse (4) befestigt ist und dass eine von der Halterung (8) weg gerichtete Seitenwand (48a) oder ein von der Halterung (8) weg gerichteter Teil einer Seitenwand (48a) eine geringere Höhe (h_a) aufweist als eine gegenüberliegende Seitenwand (48b) bzw. ein gegenüberliegender Teil einer Seitenwand (48b).

7. Motorradleuchte (2) nach einem der vorhergehenden Ansprüche, **dadurch gekennzeichnet, dass**
die Motorradleuchte (2) mehrere Lichtquellen (10) zur Realisierung mehrerer unterschiedlicher Leuchtenfunktionen aufweist, wobei jeweils mindestens eine der Lichtquellen (10) zur Realisierung einer der Leuchtenfunktionen dient.

8. Motorradleuchte (2) nach Anspruch 7, **dadurch gekennzeichnet, dass**
die unterschiedlichen Leuchtenfunktionen der Motorradleuchte (2) ein Blinklicht und ein Positionslicht oder ein Rücklicht und ein Bremslicht oder ein Blinklicht, ein Rücklicht und ein Bremslicht umfassen.

9. Motorradleuchte (2) nach Anspruch 7 oder 8, **dadurch gekennzeichnet, dass**
die Vorsatzoptik (12) zwischen allen Lichtquellen (10) und der Lichtaustrittsöffnung (6) angeordnet ist und die Vorsatzoptik (12) das von allen Lichtquellen (10) ausgesandte Licht zur Erzeugung der Lichtverteilungen der entsprechenden Leuchtenfunktionen umlenkt und formt.

10. Motorradleuchte (2) nach einem der Ansprüche 7 bis 9, **dadurch gekennzeichnet, dass**
mindestens zwei der Lichtquellen (10) Licht unterschiedlicher Farben aussenden.

11. Motorradleuchte (2) nach einem der vorhergehenden Ansprüche, **dadurch gekennzeichnet, dass**
die Lichtaustrittsfläche (16) der Vorsatzoptik (12) bei durch die Vorsatzoptik (12) verschlossener Lichtaustrittsöffnung (6) bündig mit einem die Lichtaustrittsöffnung (6) begrenzenden Rand (52) des Gehäuses (4) abschließt.

12. Motorradleuchte (2) nach einem der vorhergehenden Ansprüche, **dadurch gekennzeichnet, dass**
das Gehäuse (4) einen die Lichtaustrittsöffnung (6) begrenzenden umlaufenden Rand (52) aufweist, dass die Vorsatzoptik (12) einen radial nach außen abstehenden umlaufenden Kragen (54) aufweist, und dass der Rand (52) und der Kragen (54) einander zugewandte Auflageflächen aufweisen, über die die Vorsatzoptik (12) an dem Gehäuse (4) befestigt ist.

13. Motorradleuchte (2) nach Anspruch 12, **dadurch gekennzeichnet, dass**
die Auflageflächen des umlaufenden Rands (52) des Gehäuses (4) und des umlaufenden Kragens (54) der Vorsatzoptik (12) einander entsprechend abgeschrägt sind, so dass die Auflagefläche des umlaufenden Rands (52) eine konusartige Form aufweist und der umlaufende Kragen (54) nach außen hin spitz zuläuft.

14. Motorradleuchte (2) nach einem der vorhergehenden Ansprüche, **dadurch gekennzeichnet, dass**
die mindestens eine Lichtquelle (10) auf einer Leiterplatte (34) angeordnet und über diese elektrisch kontaktiert ist und dass die Leiterplatte (34) in einer Richtung (z) parallel zu der Hauptabstrahlrichtung (14) der mindestens einen Lichtquelle (10) mit ihrer von der mindestens einen Lichtquelle (10) abgewandten Seite auf einem Auflagebereich (56) des Gehäuses (4) aufliegt und in dem Gehäuse (4) befestigt ist.

15. Motorradleuchte (2) nach Anspruch 14, **dadurch gekennzeichnet, dass**
die Vorsatzoptik (12) in einer Ebene (xy) senkrecht zu der Hauptabstrahlrichtung (14) der mindestens einen Lichtquelle (10) durch Arretierstifte, die in entsprechende Arretieröffnungen der Leiterplatte (34) eingreifen, bezüglich der Leiterplatte (34) positioniert ist.

## Claims

1. Motorbike lamp (2) for realising at least one lighting function, the motorbike lamp (2) comprising
- a housing (4) with a light emission opening (6),
- a holding element (8) fixed to the housing (4) for fixing the motorbike lamp (2) to a motorbike,
- at least one light source (10) arranged in the housing (4), and
- a primary optics (12) made of a solid transparent material arranged between the at least one light source (10) and the light emission opening (6),
wherein the at least one light source (10) comprises an LED and is arranged and aligned in the housing (4) in such a way that it emits light in a main radiation direction (14) running through the light emission opening (6), and
wherein the primary optics (12) close the light emission opening (6) and deflect and shape the light emitted by the at least one light source (10) to produce a light distribution corresponding to a lighting function realised by the motorbike lamp (2),
wherein a light emitting surface (16) of the primary optics (12), viewed in a horizontal plane which passes through the light source (10) or one of the light sources (10), comprises the main radiation direction (14) of the light source (10) and, when the motorbike lamp (2) is mounted to the motorbike, is oriented perpendicular to a vertical longitudinal plane of the motorbike, the longitudinal plane of the motorbike passing through wheels of the motorbike and perpendicular to the axes of rotation of the wheels, has a first convex curvature, and has a second convex curvature when viewed in a vertical plane passing through the light source (10) or one of the light sources (10), comprising the main radiation direction (14) of the light source (10) and being oriented parallel to the longitudinal plane of the motorbike,
**characterised in that**
the second convex curvature in the vertical plane is less than the first convex curvature in the horizontal plane.

2. Motorbike lamp (2) according to claim 1, **characterised in that**
the light emitting surface (16) of the primary optics (12) viewed in the horizontal plane is inclined with respect to a plane (44), which extends perpendicularly to the main radiation direction (14) of the light source (10) or of one of the light sources (10).

3. Motorbike lamp (2) according to claim 2, **characterised in that**
the light emitting surface (16) of the primary optics (12) viewed in the horizontal plane is inclined with respect to the plane (44), which extends perpendicularly to the main radiation direction (14) of the light source (10) or of one of the light sources (10), in a direction, which, when the motorbike lamp (2) is mounted to a motorbike, is directed away from the motorbike.

4. Motorbike lamp (2) according to one of the preceding claims, **characterised in that**
the holding element (8), viewed in the horizontal plane, is fixed laterally to the housing (4) and **in that** the light emitting surface (16) of the primary optics (12), viewed in the horizontal plane, is inclined away from the holding element (8).

5. Motorbike lamp (2) according to one of the preceding claims, **characterised in that**
the housing (4) comprises side walls (48) which delimit the housing (4) to the side and the light emission opening (6), wherein, when the motorbike lamp (2) is mounted to a motorbike, a side wall (48a) directed away from the motorbike or a part of a side wall (48a) directed away from the motorbike has a smaller height (h_a) than an opposite side wall (48b) or an opposite part of a side wall (48b).

6. Motorbike lamp (2) according to one of the preceding claims, **characterised in that**
the housing (4) comprises side walls (48) which delimit the housing (4) to the side and the light emission opening (6), **in that** the holding element (8) is fixed laterally to the housing (4), as viewed in the horizontal plane, and **in that** a side wall (48a) directed away from the holding element (8) or a part of a side wall (48a) directed away from the holding element (8) has a smaller height (h_a) than an opposite side wall (48b) or an opposite part of a side wall (48b).

7. Motorbike lamp (2) according to one of the preceding claims, **characterised in that**
the motorbike lamp (2) has a plurality of light sources (10) for realising a plurality of different lighting functions, at least one of the light sources (10) in each case serving to realise one of the lighting functions.

8. Motorbike lamp (2) according to claim 7, **characterised in that**
the different lighting functions of the motorbike lamp (2) comprise a direction indicator light and a position light or a tail light and a brake light or a direction indicator light, a tail light and a brake light.

9. Motorbike lamp (2) according to claim 7 or 8, **characterised in that**
the primary optics (12) is arranged between all the light sources (10) and the light emission opening (6) and the primary optics (12) deflects and shapes the light emitted by all the light sources (10) to produce the light distributions of the corresponding lighting functions.

10. Motorbike lamp (2) according to any one of claims 7 to 9, **characterised in that** at least two of the light sources (10) emit light of different colours.

11. Motorbike lamp (2) according to one of the preceding claims, **characterised in that**
the light emitting surface (16) of the primary optics (12) is flush with an edge (52) of the housing (4) delimiting the light emission opening (6) when the light emission opening (6) is closed by the primary optics (12).

12. Motorbike lamp (2) according to one of the preceding claims, **characterised in that**
the housing (4) has a circumferential edge (52) delimiting the light emission opening (6), **in that** the primary optics (12) have a circumferential collar (54) projecting radially outwards, and **in that** the edge (52) and the collar (54) have bearing surfaces facing one another, by means of which the primary optics (12) is attached to the housing (4).

13. Motorbike lamp (2) according to claim 12, **characterised in that**
the bearing surfaces of the circumferential edge (52) of the housing (4) and of the circumferential collar (54) of the primary optics (12) are correspondingly bevelled with respect to one another, so that the bearing surface of the circumferential edge (52) has a cone-like shape and the circumferential collar (54) tapers towards the outside.

14. Motorbike lamp (2) according to one of the preceding claims, **characterised in that**
the at least one light source (10) is arranged on a printed circuit board (34) and is electrically contacted via the latter, and **in that** the printed circuit board (34) rests in a direction (z) parallel to the main radiation direction (14) of the at least one light source (10) with its side facing away from the at least one light source (10) on a support region (56) of the housing (4) and is fastened in the housing (4).

15. Motorbike lamp (2) according to claim 14, **characterised in that**
the primary optics (12) is positioned in a plane (xy) perpendicular to the main radiation direction (14) of the at least one light source (10) with respect to the printed circuit board (34) by locking pins which engage in corresponding locking openings of the printed circuit board (34).

## Revendications

1. Feu de moto (2) pour réaliser au moins une fonction d'éclairage, le feu de moto (2) comprenant
- un boîtier (4) avec une ouverture de sortie de lumière (6),
- un support (8) fixé au boîtier (4) pour fixer le feu de moto (2) à une moto,
- au moins une source lumineuse (10) disposée dans le boîtier (4), et
- une optique rapportée (12) disposée entre la au moins une source lumineuse (10) et l'ouverture de sortie de lumière (6) et réalisée dans un matériau transparent massif,
la au moins une source lumineuse (10) comprend une LED et est disposée et orientée dans le boîtier (4) de manière à émettre de la lumière dans une direction de rayonnement principale (14) passant par l'ouverture de sortie de lumière (6), et
l'optique rapportée (12) fermant l'ouverture de sortie de lumière (6) et déviant et formant la lumière émise par l'au moins une source lumineuse (10) pour produire une répartition de la lumière correspondant à une fonction d'éclairage réalisée par le feu de moto (2),
une surface de sortie de lumière (16) de l'optique rapportée (12), vue dans un plan horizontal passant par la source lumineuse (10) ou l'une des sources lumineuses (10), comprenant la direction de rayonnement principale (14) de la source lumineuse (10) et étant orientée perpendiculairement à un plan longitudinal vertical de la moto lorsque le feu de moto (2) est monté sur la moto, le plan longitudinal de la moto passant par des roues de la moto et perpendiculaire aux axes de rotation des roues, présentant une première courbure convexe et, vu dans un plan vertical passant par la source lumineuse (10) ou l'une des sources lumineuses (10), comprenant la direction de rayonnement principale (14) de la source lumineuse (10) et étant orienté parallèlement au plan longitudinal de la moto, présentant une deuxième courbure convexe,
**caractérisé en ce que**
la deuxième courbure convexe dans le plan vertical est inférieure à la première courbure convexe dans le plan horizontal.

2. Feu de moto (2) selon la revendication 1, **caractérisé en ce que**
la surface de sortie de lumière (16) de l'optique rapportée (12) est inclinée par rapport à un plan (44) perpendiculaire à la direction de rayonnement principale (14) de la source lumineuse (10) ou de l'une des sources lumineuses (10), vu dans le plan horizontal.

3. Feu de moto (2) selon la revendication 2, **caractérisé en ce que**
la surface de sortie de lumière (16) de l'optique rapportée (12) est inclinée par rapport au plan (44) perpendiculaire à la direction de rayonnement principale (14) de la source lumineuse (10) ou de l'une des sources lumineuses (10), vu dans le plan horizontal, dans une direction qui, lorsque le feu de moto (2) est fixé à une moto, est dirigée à l'opposé de la moto.

4. Feu de moto (2) selon l'une quelconque des revendications précédentes, **caractérisé en ce que**
le support (8) est fixé latéralement au boîtier (4), vu dans le plan horizontal, et **en ce que** la surface de sortie de lumière (16) de l'optique rapportée (12) est inclinée, vu dans le plan horizontal, en s'éloignant du support (8).

5. Feu de moto (2) selon l'une des revendications précédentes, **caractérisé en ce que**
le boîtier (4) présente des parois latérales (48) qui délimitent le boîtier (4) sur le côté et l'ouverture de sortie de lumière (6), dans lequel, lorsque le feu de moto (2) est fixé à une moto, une paroi latérale (48a) orientée à l'opposé de la moto ou une partie d'une paroi latérale (48a) orientée à l'opposé de la moto présente une hauteur (h_a) inférieure à celle d'une paroi latérale opposée (48b) ou d'une partie opposée d'une paroi latérale (48b).

6. Feu de moto (2) selon l'une quelconque des revendications précédentes, **caractérisé en ce que**
le boîtier (4) présente des parois latérales (48) qui délimitent le boîtier (4) sur le côté et l'ouverture de sortie de lumière (6), **en ce que** le support (8) est fixé latéralement au boîtier (4), vu dans le plan horizontal, et **en ce qu'**une paroi latérale (48a) orientée à l'opposé du support (8) ou une partie d'une paroi latérale (48a) orientée à l'opposé du support (8) présente une hauteur (h_a) inférieure à celle d'une paroi latérale opposée (48b) ou une partie opposée d'une paroi latérale (48b).

7. Feu de moto (2) selon l'une quelconque des revendications précédentes, **caractérisé en ce que**
le feu de moto (2) présente plusieurs sources lumineuses (10) pour réaliser plusieurs fonctions d'éclairage différentes, au moins une des sources lumineuses (10) servant respectivement à réaliser une des fonctions d'éclairage.

8. Feu de moto (2) selon la revendication 7, **caractérisé en ce que**
les différentes fonctions d'éclairage du feu de moto (2) comprennent un feu clignotant et un feu de position ou un feu arrière et un feu de stop ou un feu clignotant, un feu arrière et un feu de stop.

9. Feu de moto (2) selon la revendication 7 ou 8, **caractérisé en ce que**
l'optique rapportée (12) est disposée entre toutes les sources lumineuses (10) et l'ouverture de sortie de lumière (6), et l'optique rapportée (12) dévie et met en forme la lumière émise par toutes les sources lumineuses (10) pour produire les répartitions de lumière des fonctions correspondantes d'éclairage.

10. Feu de moto (2) selon l'une des revendications 7 à 9, **caractérisé en ce que**
au moins deux des sources lumineuses (10) émettent de la lumière de couleurs différentes.

11. Feu de moto (2) selon l'une des revendications précédentes, **caractérisé en ce que**
la surface de sortie de lumière (16) de l'optique rapportée (12), lorsque l'ouverture de sortie de lumière (6) est fermée par l'optique rapportée (12), affleure avec un bord (52) du boîtier (4) délimitant l'ouverture de sortie de lumière (6).

12. Feu de moto (2) selon l'une des revendications précédentes, **caractérisé en ce que**
le boîtier (4) présente un bord périphérique (52) délimitant l'ouverture de sortie de lumière (6), **en ce que** l'optique rapportée (12) présente un collet périphérique (54) faisant saillie radialement vers l'extérieur, et **en ce que** le bord (52) et le collet (54) présentent des surfaces d'appui tournées l'une vers l'autre, par lesquelles l'optique rapportée (12) est fixée au boîtier (4).

13. Feu de moto (2) selon la revendication 12, **caractérisé en ce que**
les surfaces d'appui du bord périphérique (52) du boîtier (4) et du collet périphérique (54) de l'optique rapportée (12) sont inclinées l'une par rapport à l'autre de manière correspondante, de sorte que la surface d'appui du bord périphérique (52) présente une forme conique et que le collet périphérique (54) se termine en pointe vers l'extérieur.

14. Feu de moto (2) selon l'une des revendications précédentes, **caractérisé en ce que**
l'au moins une source lumineuse (10) est disposée sur une plaquette à circuits imprimés (34) et est mise en contact électrique par l'intermédiaire de celle-ci, et **en ce que** la plaquette à circuits imprimés (34) repose, dans une direction (z) parallèle à la direction de rayonnement principale (14) de l'au moins une source lumineuse (10), avec son côté opposé à l'au moins une source lumineuse (10), sur une zone d'appui (56) du boîtier (4) et est fixée dans le boîtier (4).

15. Feu de moto (2) selon la revendication 14, **caractérisé en ce que**
l'optique rapportée (12) est positionnée par rapport à la plaquette à circuits imprimés (34) dans un plan (xy) perpendiculaire à la direction de rayonnement principale (14) de la au moins une source lumineuse (10), au moyen de broches d'arrêt qui s'engagent dans des ouvertures d'arrêt correspondantes de la plaquette à circuits imprimés (34).
